# EUROPÄISCHE PATENTANMELDUNG

(11) **EP 3 216 980 A1**
(43) Veröffentlichungstag der Anmeldung: **13.09.2017**
(21) Anmeldenummer: 16159115.1
(22) Anmeldetag: 08.03.2016
(51) Int. Cl.: F01D 5/00, F01D 11/12, F01D 11/16

(54) **VERFAHREN ZUR HERSTELLUNG ODER ZUR REPARATUR EINER LAUFSCHAUFEL UND/ODER EINES GEHÄUSES EINER STRÖMUNGSMASCHINE**

(71) Anmelder: Siemens Aktiengesellschaft, 80333 München (DE)
(72) Erfinder: Blank, Robin, 14167 Berlin (DE); Burbaum, Bernd, 14612 Falkensee (DE); Duchardt, Markus, 10405 Berlin (DE); Farahbod, Lena, 12163 Berlin (DE); Gollmer, Marian, 10829 Berlin (DE); Jokisch, Torsten, 15366 Neuenhagen bei Berlin (DE); Krabiell, Kay, 16562 Hohen Neuendorf (DE); Lammers, Heiko, 10789 Berlin (DE); Laux, Britta, 14059 Berlin (DE); Lerche, Heiko, 13059 Berlin (DE); Lorenz, Thomas, 14193 Berlin (DE); Maiz, Khaled, 13355 Berlin (DE); Mertens, Dirk, 13189 Berlin (DE); Meyer, Tobias, 13503 Berlin (DE); Pipke, Romina, 10777 Berlin (DE)

(57) **Zusammenfassung**

Die Erfindung betrifft ein Verfahren zur Herstellung oder zur Reparatur einer Laufschaufel (4), die einen Schaufelfuß (5) und ein sich an diesen anschließendes Schaufelblatt (6) aufweist, das an seinem freien Ende eine Schaufelspitze (7) definiert, wobei zumindest im Bereich der Schaufelspitze (7) eine Beschichtung (8) aufgetragen wird, dadurch gekennzeichnet, dass es sich bei der Beschichtung (8) um eine oxidierbare Metalllegierung handelt, die insbesondere über ein parabolisches Oxidwachstum während des bestimmungsgemäßen Betriebs der Laufschaufel (4) eine vergleichsweise dicke Oxidschicht bildet. Ferner betrifft die Erfindung ein Verfahren zur Herstellung oder zur Reparatur eines Gehäuses (2) einer Strömungsmaschine (1), insbesondere Gasturbine, das zur Aufnahme eines Läufers (3) ausgelegt ist, an dem zumindest ein eine Vielzahl von Laufschaufeln (4) aufweisender Laufschaufelkranz angeordnet ist, wobei eine Innenfläche des Gehäuses (2) in einem den Laufschaufelkranz umfänglich umgebenden Bereich mit einer Beschichtung (9) versehen wird, dadurch gekennzeichnet, dass es sich bei der Beschichtung (9) um eine oxidierbare Metalllegierung handelt, die insbesondere über ein parabolisches Oxidwachstum während des bestimmungsgemäßen Betriebs des Gehäuses (2) eine vergleichsweise dicke Oxidschicht bildet.

## Beschreibung

Die vorliegende Erfindung betrifft ein Verfahren zur Herstellung oder zur Reparatur einer Laufschaufel, die einen Schaufelfuß und ein sich an diesen anschließendes Schaufelblatt aufweist, das an seinem freien Ende eine Schaufelspitze definiert, wobei zumindest im Bereich der Schaufelspitze eine Beschichtung aufgetragen wird. Ferner betrifft die vorliegende Erfindung ein Verfahren zur Herstellung oder zur Reparatur eines Gehäuses einer Strömungsmaschine, insbesondere Gasturbine, das zur Aufnahme eines Läufers ausgelegt ist, an dem zumindest ein eine Vielzahl von Laufschaufeln aufweisender Laufschaufelkranz angeordnet ist, wobei eine Innenfläche des Gehäuses in einem den Laufschaufelkranz umfänglich umgebenden Bereich mit einer Beschichtung versehen wird. Auch wenn nachfolgend in erster Linie auf Gasturbinen Bezug genommen wird, sei darauf hingewiesen, dass die beschriebenen Merkmale und deren Vorteile sich auch auf jede beliebige andere Strömungsmaschine beziehen können.

Gasturbinen weisen zumindest einen Laufschaufelkranz mit mehreren Laufschaufeln, der an einem Läufer angeordnet ist und zusammen mit diesen rotiert, und zumindest einen Leitschaufelkranz auf, dessen Leitschaufeln fest in einem Gehäuse der Strömungsmaschine eingebaut sind und das fluide Arbeitsmittel in einem optimalen Winkel auf die Laufschaufeln leiten. Von besonderer Bedeutung bei der Realisierung einer optimalen Leistung einer Gasturbine sind sowohl die Einstellung eines minimalen Spalts zwischen den rotierenden Laufschaufeln und dem feststehenden Gehäuse als auch die Aufrechterhaltung eines solchen minimalen Spalts während des Betriebs der Gasturbine.

Zur Einstellung eines minimalen Spalts beim Anfahren einer Gasturbine ist es bekannt, an der Schaufelspitze und/oder an dem der Schaufelspitze gegenüber liegenden Gehäuse abrasive Beschichtungen anzuordnen. Solche abreibbaren Beschichtungen sind beispielsweise in der DE 10 2011 081 323 B3 beschrieben und sind normalerweise aus hochtemperaturfesten und oxidationsbeständigen Metalllegierungen hergestellt, um während des Betriebs der Gasturbine den Umgebungsbedingungen standhalten zu können. Auch das Anreichern solcher Beschichtungen mit Hartstoffpartikeln ist bekannt. Beispielsweise wird in der DE 10 2007 056 452 A1 vorgeschlagen, auf der Schaufelspitze einer Laufschaufel eine Panzerung aus einer Nickel-Basis-Legierung oder einer Eisenbasislegierung mit darin eingelagerten Hartstoffpartikeln aufzubringen. Zusätzlich wird an dem Gehäuse ein Einlaufbelag angebracht, der aus einer metallischen Matrix mit daran eingelagerten Partikeln aus insbesondere Bentonit besteht. In der DE 10 2005 044 991 A1 ist ein Verfahren zur Herstellung einer aus einer Hartstoff-Metall-Kombination bestehenden Schutzschicht für ein Bauteil einer Gasturbine beschrieben. Aus der EP 2 952 686 A1 ist bekannt, dass eine auf einem Teil einer Oberfläche einer Schaufelspitze angeordnete Beschichtung TiN, TiCN, TiAlN, Al₂O₃, CBN, Diamant oder ähnliches umfassen kann. Bei einer Berührung zwischen der Schaufelspitze und dem Gehäuse werden derartige abrasive Beschichtungen leicht abgetragen, weshalb sich beim Anfahren der Gasturbine ein vergleichsweise geringer Spalt realisieren lässt. Dieser lässt sich allerdings nicht aufrechterhalten, was darauf zurückzuführen ist, dass sich beim Anfahren die Schaufeln wesentlich schneller als das Turbinengehäuse erhitzen, weshalb sich diese ausdehnen, bevor eine Ausdehnung des Gehäuses stattfindet. Dadurch hat der Spalt in der Startphase die geringsten Ausmaße. Wärmt sich aber nach entsprechender Betriebsdauer auch das Gehäuse auf und dehnt sich aus, so nimmt das Spaltmaß entsprechend zu, was nicht kompensiert werden kann. Hinzu kommt, dass insbesondere die Laufschaufeln während des Betriebs der Gasturbine einer starken Korrosion unterliegen, weshalb das Spaltmaß mit fortschreitender Betriebsdauer weiter zunimmt. Diese Umstände führen dazu, dass die Beschichtungen oftmals schon nach wenigen hundert Betriebsstunden aufgebraucht sind, so dass sich durch eine Spaltvergrößerung ein deutlicher Leistungsverlust der Gasturbine bemerkbar macht.

Vor diesem Hintergrund liegt der vorliegenden Erfindung die Aufgabe zugrunde, ein Verfahren zur Herstellung oder Reparatur einer Laufschaufel bzw. ein Verfahren zur Herstellung oder Reparatur eines Gehäuses einer Strömungsmaschine bereitzustellen, das es ermöglicht, den mit einer fortschreitenden Betriebsdauer einer Strömungsmaschine einhergehenden Leistungsverlust der Strömungsmaschine zu minimieren und/oder zu verlangsamen.

Zur Lösung dieser Aufgabe schafft die vorliegende Erfindung ein Verfahren ein Verfahren zur Herstellung oder zur Reparatur einer Laufschaufel der eingangs genannten Art, das dadurch gekennzeichnet ist, dass es sich bei der Beschichtung um eine oxidierbare Metalllegierung handelt, die insbesondere über ein parabolisches Oxidwachstum während des bestimmungsgemäßen Betriebs der Laufschaufel eine vergleichsweise dicke Oxidschicht bildet. Im Gegensatz zu bislang an Schaufelspitzen aufgetragenen Beschichtungen wird erfindungsgemäß also die Bildung einer möglichst schnell wachsenden und dicken Oxidschicht durch die Wahl der als Beschichtung aufgetragenen Metalllegierung gefördert, denn eine solche wachsende und auch nachwachsende Oxidschicht schließt oder verkleinert während des Turbinenbetriebs den Spalt zwischen der Schaufelspitze und dem Gehäuse. Kommt es zum Kontakt zwischen der Schaufelspitze und dem Gehäuse, so wird die Oxidschicht teilweise abgerieben. Dabei wird ein minimaler Spalt eingestellt. Vergrößert sich der Spalt während des weiteren Betriebs der Strömungsmaschine, so wird dieser durch die nachwachsende Oxidschicht wieder verkleinert. Die aufgetragene Metalllegierung dient somit als Reservoir für eine fortwährend nachwachsende Oxidschicht.

Analog schlägt vorliegende Erfindung zur Lösung der eingangs genannten Aufgabe alternativ oder zusätzlich ein Verfahren zur Herstellung oder zur Reparatur eines Gehäuses einer Strömungsmaschine der eingangs genannten Art vor, das dadurch gekennzeichnet ist, dass es sich bei der Beschichtung um eine oxidierbare Metalllegierung handelt, die insbesondere über ein parabolisches Oxidwachstum während des bestimmungsgemäßen Betriebs des Gehäuses eine vergleichsweise dicke Oxidschicht bildet. Hierdurch ergeben sich entsprechende Vorteile.

Gemäß einer Ausgestaltung der vorliegenden Erfindung ist die Metalllegierung eine Nickel-Basis-Superlegierung.

Vorteilhaft weist die Nickel-Basis-Superlegierung einen Aluminiumanteil von weniger als 5 Atomprozent auf, um die Bildung einer unerwünschten Al₂O₃-Schicht zu verhindern.

Zusätzlich oder alternativ weist die Nickel-Basis-Superlegierung einen Chromanteil von weniger als 10 Atomprozent auf, um der Bildung einer ebenfalls unerwünschten Cr₂O₃-Schicht effektiv entgegenzuwirken.

Gemäß einer weiteren Variante der vorliegenden Erfindung ist die Metalllegierung eine Cobalt-Basis-Superlegierung oder eine Eisen-Basis-Superlegierung. In diesem Fall ist im Gegensatz zur Nickel-Basis-Superlegierung ein hoher Aluminiumanteil unkritisch, da weder Cobalt-Basis-Legierungen noch Eisen-Basis-Superlegierungen zur Bildung einer Al₂O₃-Schicht neigen. Hier wird vorteilhaft lediglich der Chromanteil auf weniger als 10 Atomprozent begrenzt, so dass die Bildung einer Cr₂O₃-Schicht verhindert wird.

Gemäß einer Ausgestaltung der vorliegenden Erfindung weist die Cobalt-Basis-Superlegierung oder die Eisen-Basis-Superlegierung einen Chromanteil von weniger als 10 Atomprozent und einen kombinierten Anteil von Wolfram und Molybdän von 5 Atomprozent oder mehr auf, da Wolfram und Molybdän in Cobalt-Basis-Legierungen mit geringen Chromgehalten nicht passivierende Oxide bilden.

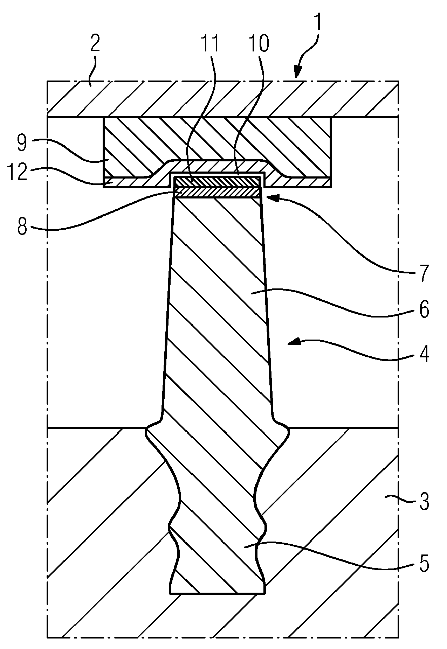

Weitere Merkmale und Vorteile der vorliegenden Erfindung werden anhand der nachfolgenden Beschreibung einer Ausführungsform eines mit einem ersten erfindungsgemäßen Verfahren hergestellten Gehäuses und einer Ausführungsform einer mit einem zweiten erfindungsgemäßen Verfahren hergestellten Laufschaufel unter Bezugnahme auf die beiliegende Zeichnung deutlich.

Die Zeichnung zeigt eine schematische Querschnittansicht eines Teilbereiches einer Strömungsmaschine 1 gemäß einer Ausführungsform der Erfindung, bei der es sich vorliegend um eine Gasturbine handelt. Die Strömungsmaschine 1 umfasst ein Gehäuse 2, in dem ein Läufer 3 aufgenommen ist. An dem Läufer 3 sind axial benachbart mehrere Laufschaufelkränze angeordnet, die jeweils eine Vielzahl von in Umfangsrichtung benachbart angeordneten Laufschaufeln 4 aufweisen. Jede Laufschaufel 4 umfasst einen Schaufelfuß5, mit dem sie am Läufer 3 gehalten ist, und ein sich an diesen anschließendes Schaufelblatt 6, das an seinem freien Ende eine Schaufelspitze 7 definiert. Sowohl im Bereich der Schaufelspitze 7 als auch an einer Innenfläche des Gehäuses 2 in einem den Laufschaufelkranz umfänglich umgebenden Bereich ist eine Beschichtung 8 bzw. 9 aufgetragen, insbesondere unter Einsatz eines generativen Fertigungsverfahrens, wie etwa Laserauftragsschweißen oder LMD, um nur einige mögliche Beispiele zu nennen. Entsprechend sind die Beschichtungen 8 und 9 in radialer Richtung betrachtet einander gegenüber angeordnet.

Bei den Beschichtungen 8 und 9 handelt es sich um Metalllegierungsbeschichtungen aus einer Superlegierung, vorliegend jeweils aus einer Nickel-Basis-Superlegierung mit einem Aluminiumanteil von weniger als 5 Atomprozent und einem Chromanteil von weniger als 10 Atomprozent. So können die Beschichtungen 8 und 9 beispielsweise aus einer Variation einer kommerziell erhältlichen Legierung Inconel 625 mit reduziertem Chromgehalt hergestellt sein, also aus einer Nickel-Basis-Superlegierung, die folgende Bestandteile aufweist: Eisen (Fe) < 5 Gew.-%, Chrom (Cr) < 10 Gew.-%, Molybdän (Mo) 8 - 10 Gew.-%, Niob (Nb) + Tantal (Ta) 3,15 - 4,15 Gew.-%, Rest Nickel (Ni).

Alternativ können die Beschichtungen 8 und 9 auch aus einer Metalllegierung hergestellt sein, bei der es sich um eine Kobalt-Basis-Superlegierung oder um eine Eisen-Basis-Superlegierung handelt, die einen Chromanteil von weniger als 10 Atomprozent aufweist. Ein Beispiel für eine solche Kobalt-Basis-Superlegierung ist Co9A19W mit einem Aluminiumanteil von 9 Atomprozent und einem Wolframanteil von ebenfalls 9 Atomprozent. Als Beispiel für eine solche Eisen-Basis-Superlegierung ist Incoloy 907, das folgende Bestandteile aufweist: Nickel (Ni) 35 - 40 Gew.-%, Cobalt (Co) 12 - 16 Gew.-%, Niob (Nb) 4,3 - 5,2 Gew.-%, Titan (Ti) 1,3 - 1,8 Gew.-%, Aluminium (Al) maximal 0,2 Gew.-%, Silizium (Si) 0,07 - 0,35 Gew.-%, Rest Eisen (Fe).

Es sei darauf hingewiesen, dass, auch wenn nach den bisherigen Ausführungen beide Beschichtungen 8 und 9 aus einer der genannten Superlegierungen hergestellt sind, erfindungsgemäß lediglich eine der beiden Beschichtungen 8 und 9 vorhanden sein und/oder aus einer der genannten Superlegierungen hergestellt sein muss. Ferner sollte klar sein, dass die Beschichtungen 8 und 9 auch aus unterschiedlichen Metalllegierungen hergestellt sein können.

Beim Anfahren der Strömungsmaschine 1 erhitzen sich die Laufschaufeln 4 schneller als das Gehäuse 2, weshalb sich die Laufschaufeln 4 derart ausdehnen, dass die Beschichtungen 8 und 9 einander berühren. Hierbei kommt es bei den Beschichtungen 8 und 9 zu einem Abrieb, wodurch ein Spalt 10 mit geringem Spaltmaß definiert wird. Mit zunehmender Betriebsdauer der Strömungsmaschine 1 erwärmt sich auch das Gehäuse 2 und dehnt sich aus, wodurch das Spaltmaß des Spaltes 10 entsprechend zunimmt. Gleichzeitig stellt sich bei den Beschichtungen 8 und 9 Dank der für diese gewählten Superlegierungen mit zunehmender Betriebsdauer ein parabolisches Oxidwachstum ein, wodurch abplatzungsresistente dicke Oxidschichten 11 bzw. 12 entstehen, die den Effekt der Vergrößerung des Spaltmaßes des Spaltes 10 nach und nach wieder kompensieren, bis sich ein optimal kleines Spaltmaß des Spaltes 10 einstellt. Wachsen die Oxidschichten 11 und 12 derart an, dass sie wieder einander berühren, kommt es zum erneuten Abrieb unter Beibehaltung des optimalen Spaltmaßes des Spaltes 10.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung oder zur Reparatur einer Laufschaufel (4), die einen Schaufelfuß (5) und ein sich an diesen anschließendes Schaufelblatt (6) aufweist, das an seinem freien Ende eine Schaufelspitze (7) definiert, wobei zumindest im Bereich der Schaufelspitze (7) eine Beschichtung (8) aufgetragen wird, **dadurch gekennzeichnet, dass** es sich bei der Beschichtung (8) um eine oxidierbare Metalllegierung handelt, die insbesondere über ein parabolisches Oxidwachstum während des bestimmungsgemäßen Betriebs der Laufschaufel (4) eine vergleichsweise dicke Oxidschicht bildet.

2. Verfahren zur Herstellung oder zur Reparatur eines Gehäuses (2) einer Strömungsmaschine (1), insbesondere Gasturbine, das zur Aufnahme eines Läufers (3) ausgelegt ist, an dem zumindest ein eine Vielzahl von Laufschaufeln (4) aufweisender Laufschaufelkranz angeordnet ist, wobei eine Innenfläche des Gehäuses (2) in einem den Laufschaufelkranz umfänglich umgebenden Bereich mit einer Beschichtung (9) versehen wird, **dadurch gekennzeichnet, dass** es sich bei der Beschichtung (9) um eine oxidierbare Metalllegierung handelt, die insbesondere über ein parabolisches Oxidwachstum während des bestimmungsgemäßen Betriebs des Gehäuses (2) eine vergleichsweise dicke Oxidschicht bildet.

3. Verfahren nach Anspruch 1 oder 2,
**dadurch gekennzeichnet, dass**
die Metalllegierung eine Nickel-Basis-Superlegierung ist.

4. Verfahren nach Anspruch 3,
**dadurch gekennzeichnet,**
**dass** die Nickel-Basis-Superlegierung einen Aluminiumanteil von weniger als 5 Atomprozent aufweist.

5. Verfahren nach Anspruch 3 oder 4,
**dadurch gekennzeichnet, dass**
die Nickel-Basis-Superlegierung einen Chromanteil von weniger als 10 Atomprozent aufweist.

6. Verfahren nach Anspruch 1 oder 2,
**dadurch gekennzeichnet, dass**
die Metalllegierung eine Cobalt-Basis-Superlegierung oder eine Eisen-Basis-Superlegierung ist.

7. Verfahren nach Anspruch 6,
**dadurch gekennzeichnet, dass**
die Cobalt-Basis-Superlegierung oder die Eisen-Basis-Superlegierung einen Chromanteil von weniger als 10 Atomprozent aufweist.

8. Verfahren nach Anspruch 6 oder 7,
**dadurch gekennzeichnet, dass**
die Cobalt-Basis-Superlegierung oder die Eisen-Basis-Superlegierung einen Chromanteil von weniger als 5 Atomprozent und einen kombinierten Anteil von Wolfram und Molybdän von 5 Atomprozent oder mehr aufweist.
